# EUROPEAN PATENT APPLICATION

(11) **EP 3 961 958 A1**
(43) Date of publication of application: **02.03.2022**
(21) Application number: 20871051.7
(22) Date of filing: 21.09.2020
(51) Int. Cl.: H04L 5/00

(54) **RESOURCE ACTIVATION METHOD AND APPARATUS, STORAGE MEDIUM AND ELECTRONIC APPARATUS**

(30) Priority: 30.09.2019 CN 201910944519
(71) Applicant: ZTE Corporation, shenzhen Guangdong 518057 (CN)
(72) Inventor: XU, Chaoxiang, Shenzhen, Guangdong 518057 (CN); WEI, Yuzhen, Shenzhen, Guangdong 518057 (CN)
(74) Representative: Betten & Resch
(86) International application number: PCT/CN2020/116573
(87) International publication number: WO 2021/063206

(57) **Abstract**

Provided are a resource activation method and apparatus, a storage medium and an electronic apparatus. The method includes: receiving an activation message transmitted by a network device, the activation message being configured to trigger activation, by a UE, of a downlink semi-persistent resource; and transmitting a response message to the network device after the downlink semi-persistent resource is activated, the response message being configured to indicate that the downlink semi-persistent resource has been activated.

## Description

### CROSS-REFERENCE TO RELATED APPLICATION

The present application claims priority to Chinese Patent Application No. 201910944519.8 filed to the CNIPA on September 30, 2019, which is incorporated herein by reference in its entirety.

### TECHNICAL FIELD

The present application relates to the field of communications, for example, to a resource activation method and apparatus, a storage medium and an electronic apparatus.

### BACKGROUND

In the new radio (NR) access technology network, the downlink semi-persistent resource used by the user equipment (UE) is activated by two steps. Firstly, a configuration is partially issued by the network through a radial resource control (RRC) signaling. The configuration will not be activated after being issued. Then, the downlink semi-persistent resource is activated, that is, the UE activates the downlink semi-persistent resource upon receiving the downlink control information (DCI) new data indicator (NDI) =0 of the physical downlink control channel (PDCCH).

In a case where the interface (i.e., Uu interface) between the UE and the universal mobile telecommunications system terrestrial radio access network (UTRAN) (the radio interface between the UTRAN and the UE) is relatively low in reliability, the UE blindly detects the DCI of the PDCCH, so the UE may miss the DCI corresponding to the PDCCH, resulting in the failure to activate the downlink semi-persistent resource. As a result, the network considers that the downlink semi-persistent resource of the UE has been activated, but the UE has not activated the downlink semi-persistent resource, resulting in state inconsistency between the network and the UE. In this case, the UE cannot receive the downlink data subsequently delivered by the network, and the network cannot distinguish the reason why the UE does not receive the downlink data. For example, the network cannot determine whether or not the failure of the UE to receive downlink data is caused by abnormal downlink decoding or non-activation of downlink semi-static resources, which increases the complexity of network processing. In addition, in order to restore the link, the network may re-activate the downlink semi-persistent resource or reconfigure the resource, so that the delay of downlink data delivery is invisibly increased. For example, if the network service is a packet internet groper (PING) packet and the delay of the PING is set to be very short, the PING packet will be lost, thereby affecting the service performance. On the other hand, in a case where there exist both a persistent configuration and a dynamic configuration, if the network has perceived that the UE has a downlink semi-persistent resource, the dynamic downlink resource may not be configured, thus causing the downlink service to be blocked. Still on the other hand, when the network deactivates the downlink semi-persistent resource of the UE again, since the UE does not perceive the activation, the network cannot receive a deactivation acknowledgement from the UE in the physical layer, resulting in the retransmission of the deactivation message. The longer the retransmission time is, the longer the downlink resources are occupied. Thus, the utilization efficiency of downlink resources is reduced.

There are no solutions to the problem that the service cannot be normally carried out in the related art due to the inconsistent perceptions of the network and the UE on whether or not the downlink semi-persistent resource is activated.

### SUMMARY

Embodiments of the present application provides a resource activation method and apparatus, a storage medium and an electronic apparatus, in order to at least solve the problem that the service cannot be normally carried out in the related art due to the inconsistent perceptions of the network and the UE on whether or not the downlink semi-persistent resource is activated.

In accordance with an embodiment of the present application, a resource activation method is provided, including:
receiving an activation message transmitted by a network device, the activation message being configured to trigger activation, by a UE, of a downlink semi-persistent resource; and
transmitting a response message to the network device after the downlink semi-persistent resource is activated, the response message being configured to indicate that the downlink semi-persistent resource has been activated.

In accordance with another embodiment of the present application, another resource activation method is further provided, including:
transmitting an activation message to a UE, the activation message being configured to trigger activation, by the UE, of a downlink semi-persistent resource; and
receiving a response message, the response message being transmitted by the UE after the downlink semi-persistent resource is activated, the response message being configured to indicate that the downlink semi-persistent resource has been activated.

In accordance with still another embodiment of the present application, a resource activation apparatus is further provided, including:
a receiving module configured to receive an activation message transmitted by a network device, the activation message being configured to trigger activation, by a UE, of a downlink semi-persistent resource; and
a transmitting module configured to transmit a response message to the network device after the downlink semi-persistent resource is activated, the response message being configured to indicate that the downlink semi-persistent resource has been activated.

In accordance with yet another embodiment of the present application, another resource activation apparatus is further provided, including:
a transmitting module configured to transmit an activation message to a UE, the activation message being configured to trigger activation, by the UE, of a downlink semi-persistent resource; and
a receiving module configured to receive a response message, the response message being transmitted by the UE after the downlink semi-persistent resource is activated, the response message being configured to indicate that the downlink semi-persistent resource has been activated.

In accordance with yet another embodiment of the present application, a computer-readable storage medium is further provided, where the computer-readable storage medium has stored thereon computer programs which, when executed, perform the steps in any one of the method embodiments described above.

In accordance with yet another embodiment of the present application, an electronic apparatus is further provided, including a memory and a processor, where the memory stores computer programs which, when executed by the processor, cause the processor to perform the steps in any one of the method embodiments described above.

### BRIEF DESCRIPTION OF DRAWINGS

The accompanying drawings to be described herein are used for providing the understanding of the present application and constitute a part of the present application. Illustrative embodiments of the present applications and description thereof are used for explaining the present application, rather than constituting inappropriate limitations to the present application. In the accompanying drawings:
Fig. 1 is a hardware structural diagram of a mobile terminal for carrying out a resource activation method according to an embodiment of the present application;
Fig. 2 is a flowchart of a resource activation method according to an embodiment of the present application;
Fig. 3 is a flowchart of another resource activation method according to an embodiment of the present application;
Fig. 4 is a structural block diagram of a resource activation apparatus according to an embodiment of the present application;
Fig. 5 is a structural block diagram of another resource activation apparatus according to an embodiment of the present application;
Fig. 6 is a flowchart of a resource activation method according to an optional implementation of the present application; and
Fig. 7 is a flowchart of a resource activation method according to another optional implementation of the present application.

### DETAILED DESCRIPTION

The present application will be described below by embodiments with reference to the accompanying drawings. The terms "first", "second", etc., in the specification and claims of the present application and the accompanying drawings are used to distinguish similar objects, and are not necessarily used to describe the specified order or precedence.

### Embodiment one

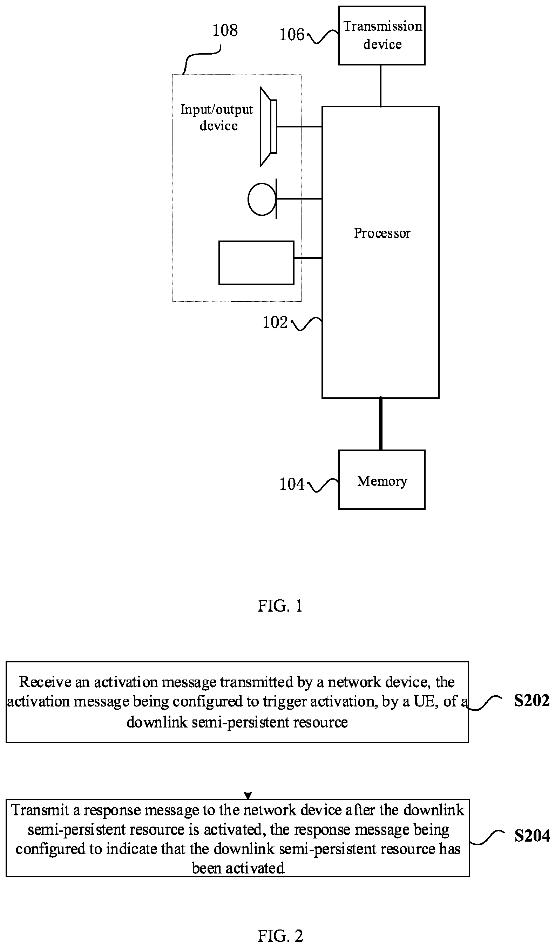

The method embodiment provided in Embodiment one of the present application may be executed in terminals, computer terminals or similar arithmetic apparatuses. Here, running on a mobile terminal is taken as an example. Fig. 1 is a hardware structure diagram of a mobile terminal in a resource activation method according to an embodiment of the present application. As shown in Fig. 1, the terminal 10 may include one or more (only one is shown in Fig. 1) processors 102 (the processor 102 may include, but not limited to, processing apparatuses such as microprocessor units (MCUs) or field programmable gate arrays (FPGAs)) and a memory 104 configured to store data. Optionally, the terminal may further include a transmission device 106 configured for performing communication functions and an input/output device 108. It should be understood by a person of ordinary skill in the art that the structure shown in Fig. 1 is only schematic and not intended to limit the structure of the terminal. For example, the terminal 10 may further include more or less components than those shown in Fig. 1, or have a configuration different from that shown in Fig. 1.

The memory 104 may be configured to store computer programs, for example, software programs and modules of application software, such as computer programs corresponding to the resource activation method in the embodiments of the present application. By running the computer programs stored in the memory 104, the processor 102 executes various functional applications and data processing, i.e., implementing the method described above. The memory 104 may include high-speed random access memories, and may further include non-volatile memories, for example, one or more magnetic storage devices, flash memories or other non-volatile solid-state memories. In some instances, the memory 104 may further include memories remotely arranged relative to the processor 102. These remote memories may be connected to the terminal 10 via a network. Examples of the network include, but not limited to, the Internet, Intranet, local area networks, mobile communication networks and combinations thereof.

The transmission device 106 is configured to receive or transmit data via a network. The examples of the network may include wireless networks provided by a communication provider of the terminal 10. In an example, the transmission device 106 includes a network interface controller (NIC) which may be connected to other network devices through base stations so as to communicate with the Internet. In an example, the transmission device 106 may be a radio frequency (RF) module which is configured to communicate with the Internet in a wireless manner.

In this embodiment, a resource activation method which can be run in the mobile terminal is provided. Fig. 2 is a flowchart of a resource activation method according to an embodiment of the present application. As shown in Fig. 2, the method includes steps S202 and S204.

At step S202, an activation message transmitted by a network device is received, the activation message being configured to trigger activation, by a UE, of a downlink semi-persistent resource.

At step S204, a response message is transmitted to the network device after the downlink semi-persistent resource is activated, the response message being configured to indicate that the downlink semi-persistent resource has been activated.

By the above steps, in which an activation message transmitted by a network device is received, the activation message being configured to trigger activation, by a UE, of a downlink semi-persistent resource; and a response message is transmitted to the network device after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

Optionally, the executive body of the steps may be a terminal, but is not limited thereto.

In an implementation, the transmitting a response message to the network device includes: transmitting an Acknowledgement (ACK) message to the network device, or transmitting a medium access control control element (MAC CE) message to the network device.

In an implementation, in the case of transmitting the MAC CE message to the network device, the MAC CE message carries a downlink identifier, the downlink identifier being configured to indicate that the activated resource is a downlink semi-persistent resource.

In an implementation, the transmitting an ACK message to the network device includes: transmitting the ACK message on a first bandwidth part, the first bandwidth part being a bandwidth part corresponding to the bandwidth part on which the UE receives the activation message.

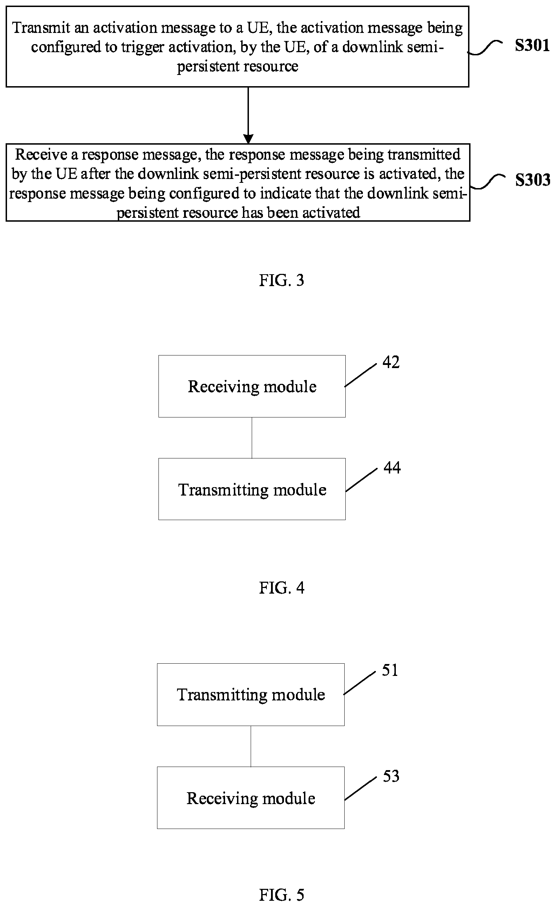

In accordance with another embodiment of the present application, another resource activation method is further provided, which can be run on a base station. Fig. 3 is a flowchart of another activation method according to an embodiment of the present application. As shown in Fig. 3, the method includes steps S301 and S303.

At step S301, an activation message is transmitted to a UE, the activation message being configured to trigger activation, by the UE, of a downlink semi-persistent resource.

At step S303, a response message is received, the response message being transmitted by the UE after the downlink semi-persistent resource is activated, the response message being configured to indicate that the downlink semi-persistent resource has been activated.

By the above steps, in which an activation message is transmitted to a UE, the activation message being configured to trigger activation, by the UE, of a downlink semi-persistent resource; and a response message is received, the response message being transmitted by the UE after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

In an implementation, the receiving a response message includes: receiving an ACK message or receiving a MAC CE message.

In an implementation, in the case of receiving the MAC CE message, the MAC CE message carries a downlink identifier, the downlink identifier being configured to indicate that the activated resource is a downlink semi-persistent resource.

In an implementation, the receiving an ACK message includes: receiving the ACK message on a first bandwidth part, the first bandwidth part being a bandwidth part corresponding to the bandwidth part on which the UE receives the activation message.

Through the description of the above implementations, those having ordinary skill in the art can understand that the methods according to the above embodiments may be implemented by means of software and a general hardware platform, and of course, may also be implemented by hardware. Based on this understanding, the technical solutions in the present application can be embodied in the form of software products. The computer software products are stored in a storage medium (e.g., a read-only memory (ROM)/random access memory (RAM), a magnetic disk or an optical disk), and include a plurality of instructions for causing a terminal device (which may be a mobile phone, a computer, a server, a network device, etc.) to perform the methods in multiple embodiments of the present application.

In this embodiment, a resource activation apparatus is further provided. The apparatus is configured to implement the above embodiments and optional implementations, and will not be repeated here. As used hereinafter, the term "module" may be a combination of software and/or hardware that implements predetermined functions. Although the apparatus described in the following embodiments may be implemented by software, it is possible and contemplated to implement the apparatus by hardware or a combination of software and hardware.

In accordance with still another embodiment of the present application, a resource activation apparatus is further provided. Fig. 4 is a structural block diagram of a resource activation apparatus according to an embodiment of the present application. As shown in Fig. 4, the resource activation apparatus includes: a receiving module 42 configured to receive an activation message transmitted by a network device, the activation message being configured to trigger activation, by a UE, of a downlink semi-persistent resource; and a transmitting module 44 configured to transmit a response message to the network device after the downlink semi-persistent resource is activated, the response message being configured to indicate that the downlink semi-persistent resource has been activated.

By the above modules, in which an activation message transmitted by a network device is received, the activation message being configured to trigger activation, by a UE, of a downlink semi-persistent resource; and a response message is transmitted to the network device after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

In an implementation, the transmitting module includes: a first transmitting sub-module configured to transmit an ACK message to the network device; or a second transmitting sub-module configured to transmit an MAC CE message to the network device.

In an implementation, in to the case of transmitting the MAC CE message to the network device, the MAC CE message carries a downlink identifier, the downlink identifier being configured to indicate that the activated resource is a downlink semi-persistent resource.

In an implementation, the first transmitting sub-module includes: a first transmitting unit configured to transmit the ACK message on a first bandwidth part, the first bandwidth part being a bandwidth part corresponding to the bandwidth part on which the UE receives the activation message.

In this embodiment, another resource activation apparatus is further provided. The apparatus is configured to implement the above embodiments and optional implementations, and will not be repeated here. As used hereinafter, the term "module" may be a combination of software and/or hardware that implements predetermined functions. Although the apparatus described in the following embodiments may be implemented by software, it is possible and contemplated to implement the apparatus by hardware or a combination of software and hardware.

In accordance with yet another embodiment of the present application, another resource activation apparatus is further provided. Fig. 5 is a structural block diagram of another resource activation apparatus according to an embodiment of the present application. As shown in Fig. 5, the resource activation apparatus includes: a transmitting module 51 configured to transmit an activation message to a UE, the activation message being configured to trigger activation, by the UE, of a downlink semi-persistent resource; and a receiving module 53 configured to receive a response message, the response message being transmitted by the UE after the downlink semi-persistent resource is activated, the response message being configured to indicate that the downlink semi-persistent resource has been activated.

By the above modules, in which an activation message is transmitted to a UE, the activation message being configured to trigger activation, by the UE, of a downlink semi-persistent resource; and a response message is received, the response message being transmitted by the UE after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

In an implementation, the receiving module includes: a first receiving sub-module configured to receive an ACK message; or a second receiving sub-module configured to receive an MAC CE message.

In an implementation, in the case of receiving the MAC CE message, the MAC CE message carries a downlink identifier, the downlink identifier being configured to indicate that the activated resource is a downlink semi-persistent resource.

In an implementation, the first receiving sub-module includes: a first receiving unit configured to transmit the ACK message on a first bandwidth part, the first bandwidth part being a bandwidth part corresponding to the bandwidth part on which the UE receives the activation message.

It is to be noted that the above modules may be implemented by software or hardware. In the latter case, the modules may be implemented in the following way, but it is not limited thereto: the modules are located in a same processor; or the modules are located in different processors in any combination, respectively.

### Optional embodiments

The embodiments of the present application will be described below with reference to scenarios.

In an NR network, the network issues a signaling for indicating activation of downlink semi-persistent scheduling (DL SPS), for example, issuing a DCI of a PDCCH. In a case where the Uu interface (i.e., an air interface) is relatively low in reliability, since the UE blindly detects the DCI of the PDCCH, the UE may miss the DCI corresponding to the PDCCH, so that the downlink semi-persistent resource cannot be activated. However, the network side considers that the downlink semi-persistent resource of the UE has been activated, resulting in inconsistent perceptions of the network and the UE on whether or not the downlink semi-persistent resource has been activated.

In order to ensure consistent perceptions of the network and the UE on whether or not the downlink semi-persistent resource is activated, two optional schemes are provided in the embodiment of the present application.

In an optional implementation, after the network side issues the DCI of the PDCCH to instruct the UE to activate the downlink semi-persistent resource, if the UE has activated the downlink semi-persistent resource, the UE may return an acknowledgment (ACK) message in the physical layer, and the UE may return this ACK message on uplink control information (UCI) of the physical uplink control channel (PUCCH). Optionally, an uplink bandwidth part (UL BWP) on which the UE transmits the ACK message should correspond to a downlink bandwidth part (DL BWP) on which the network side transmits the DL SPS to the UE.

If the network side receives the corresponding ACK message, it is determined that the UE has activated the downlink semi-persistent resource; and if the network side does not receive the ACK message, N retransmissions may be performed to ensure normal activation of the UE.

In an optional implementation, after the network side issues the DCI of the PDCCH to instruct the UE to activate the downlink semi-persistent resource, if the UE has activated the downlink semi-persistent resource, the UE returns a medium access control control element (MAC CE) (e.g., configured grant confirmation medium access control control elements) message to the network side. Upon receiving the MAC CE message, the network side confirms that the downlink semi-persistent resource has been activated. The MAC CE message may further carry an identifier for indicating an activation object. For example, if a downlink (DL) cell is filled in the MAC CE message, the network side can determine that the activation object is a downlink semi-persistent resource configuration through the MAC CE message. For example, if an uplink (DL) cell is filled in the MAC CE message, it is indicated that the activation object is an uplink persistent resource.

By the above solutions, the consistent perceptions of the network and the UE on whether or not the downlink semi-persistent resource is activated can be ensured, the complexity of network processing can be reduced, and the reliability of services can be improved.

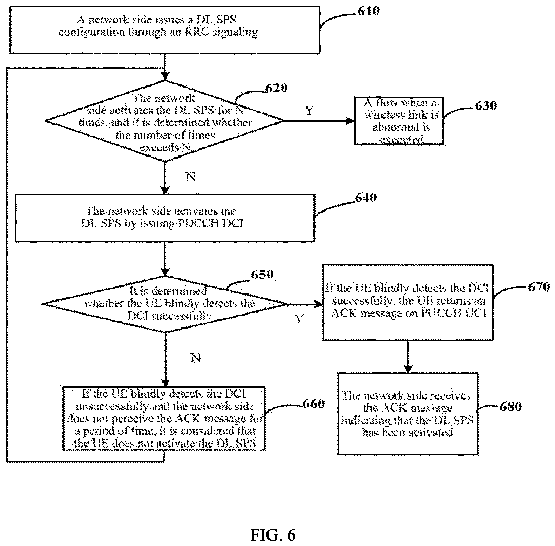

Fig. 6 is a flowchart of a resource activation method according to an optional implementation of the present application. As shown in Fig. 6, the resource activation method includes steps S610 to S680.

At step S610, a network side issues a DL SPS configuration through an RRC signaling.

At step S620, the network side activates the DL SPS for N times, and it is determined whether or not the number of times of activating the DL SPS by the network side exceeds N; if the number of times of activating the DL SPS by the network side exceeds N, step S630 will be executed; and if the number of times of activating the DL SPS by the network side does not exceed N, step S640 will be executed, where N is a positive integer and may be set in advance.

At step S630, a flow when a wireless link is abnormal is executed. For example, a prompt, an alarm or the like may be given out.

At step S640, the network side activates the DL SPS by issuing PDCCH DCI.

At step S650, it is determined whether or not the UE blindly defects the DCI successfully; if the UE blindly detects the DCI unsuccessfully, step S660 will be executed; and if the UE blindly detects the DCI successfully, step S670 will be executed.

At step S660, if the UE blindly detects the DCI unsuccessfully and the network side does not perceive an ACK message for a period of time, it is considered that the UE does not activate the DL SPS.

At step S670, if the UE blindly defects the DCI successfully, the UE returns an ACK message on the PUCCH UCI.

At step S680, the network side receives the ACK message indicating that the DL SPS has been activated; and the perceptions of the network side and the UE on whether or not the downlink semi-persistent resource is activated are kept synchronous.

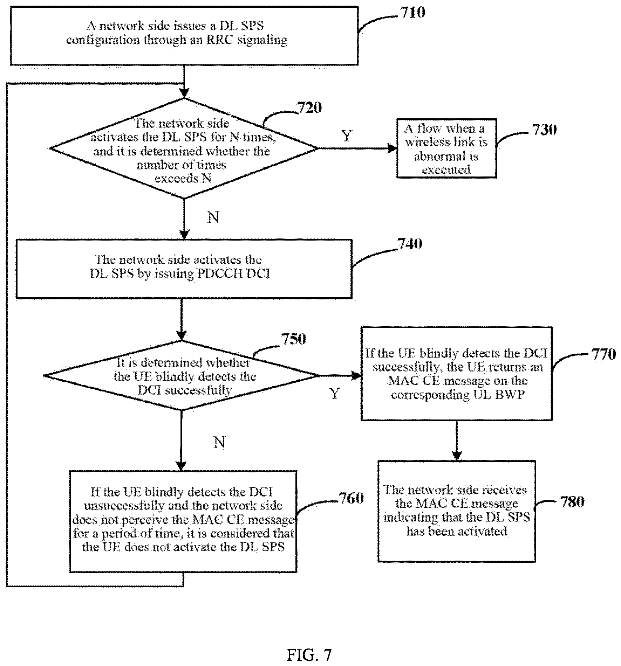

Fig. 7 is a flowchart of a resource activation method according to another optional implementation of the present application. As shown in Fig. 7, the resource activation method includes steps S710 to S780.

At step S710, a network side issues a DL SPS configuration through an RRC signaling.

At step S720, the network side activates the DL SPS for N times, and it is determined whether or not the number of times of activating the DL SPS by the network side exceeds N; if the number of times of activating the DL SPS by the network side exceeds N, step S730 will be executed; and if the number of times of activating the DL SPS by the network side does not exceed N, step S740 will be executed, where N is a positive integer and may be set in advance.

At step S730, a flow when a wireless link is abnormal is executed. For example, a prompt, an alarm or the like may be given out.

At step S740, the network side activates the DL SPS by issuing PDCCH DCI.

At step S750, it is determined whether or not the UE blindly defects the DCI successfully; if the UE blindly detects the DCI unsuccessfully, step S760 will be executed; and if the UE blindly detects the DCI successfully, step S770 will be executed.

At step S760, if the UE blindly detects the DCI unsuccessfully and the network side does not perceive an MAC CE message for a period of time, it is considered that the UE does not activate the DL SPS.

At step S770, if the UE blindly detects the DCI successfully, the UE transmits an MAC CE message (i.e., configured grant confirmation MAC CE message) on the corresponding UL BWP), where the MAC CE message carries a directional label (DL) to indicate that the DL SPS has been activated.

At step S780, the network side receives the MAC CE message indicating that the DL SPS has been activated; and the perceptions of the network side and the UE on whether or not the downlink semi-persistent resource is activated are kept synchronous.

In the embodiment of the present application, the "network", "network side" and "network device" have the same meaning and all refer to a network device that interacts with the UE, for example, a next generation Nodeb (gNB).

### Embodiment two

An embodiment of the present application further provides a computer-readable storage medium, where the computer-readable storage medium has stored thereon computer programs which, when executed, perform the steps in any one of the method embodiments.

Optionally, in this embodiment, the computer-readable storage medium may be configured to store computer programs for performing the following steps: S 10: receiving an activation message transmitted by a network device, the activation message being configured to trigger activation, by a UE, of a downlink semi-persistent resource; and S20: transmitting a response message to the network device after the downlink semi-persistent resource is activated, the response message being configured to indicate that the downlink semi-persistent resource has been activated.

By the above steps, in which an activation message transmitted by a network device is received, the activation message being configured to trigger activation, by a UE, of a downlink semi-persistent resource; and a response message is transmitted to the network device after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

Optionally, in this embodiment, the storage medium may include, but not limited to: U disks, read-only memories (ROMs), random access memories (RAMs), mobile hard disks, magnetic disks, optical disks, or various mediums capable of storing computer programs.

An embodiment of the present application further provides another computer-readable storage medium storing computer programs which, when executed, perform the steps in any one of the method embodiments described above.

Optionally, in this embodiment, the computer-readable storage medium may be configured to store computer programs for executing the following steps: S10: transmitting an activation message to a UE, the activation message being configured to trigger activation, by the UE, of a downlink semi-persistent resource; and S20: receiving a response message, the response message being transmitted by the UE after the downlink semi-persistent resource is activated, the response message being configured to indicate that the downlink semi-persistent resource has been activated.

By the above steps, in which an activation message is transmitted to a UE, the activation message being configured to trigger activation, by the UE, of a downlink semi-persistent resource; and a response message is received, the response message being transmitted by the UE after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

Optionally, in this embodiment, the storage medium may include, but not limited to: U disks, ROMs, RAMs, mobile hard disks, magnetic disks, optical disks, or various mediums capable of storing computer programs.

An embodiment of the present application further provides an electronic apparatus, including a memory and a processor, where the memory stores computer programs which, when executed by the processor, cause the processor to perform the steps in any one of the method embodiments described above.

Optionally, the electronic apparatus may further include a transmission device and an input/output device, where the transmission device is connected to the processor, and the input/output device is connected to the processor.

Optionally, in this embodiment, the processor may be configured to perform the following steps by executing computer programs: S10: receiving an activation message transmitted by a network device, the activation message being configured to trigger activation, by a UE, of a downlink semi-persistent resource; and S20: transmitting a response message to the network device after the downlink semi-persistent resource is activated, the response message being configured to indicate that the downlink semi-persistent resource has been activated.

By the above steps, in which an activation message transmitted by a network device is received, the activation message being configured to trigger activation, by a UE, of a downlink semi-persistent resource; and a response message is transmitted to the network device after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

Optionally, the examples in this embodiment may refer to the examples described in the above embodiments and optional implementations, and this embodiment will not be repeated here.

An embodiment of the present application further provides another electronic apparatus, including a memory and a processor, where the memory stores computer programs which, when executed by the processor, cause the processor to perform the steps in any one of the method embodiments described above.

Optionally, the electronic apparatus may further include a transmission device and an input/output device, where the transmission device is connected to the processor, and the input/output device is connected to the processor.

Optionally, in this embodiment, the processor may be configured to perform the following steps by executing computer programs: S10: transmitting an activation message to a UE, the activation message being configured to trigger activation, by the UE, of a downlink semi-persistent resource; and S20: receiving a response message, the response message being transmitted by the UE after the downlink semi-persistent resource is activated, the response message being configured to indicate that the downlink semi-persistent resource has been activated.

By the above steps, in which an activation message is transmitted to a UE, the activation message being configured to trigger activation, by the UE, of a downlink semi-persistent resource; and a response message is received, the response message being transmitted by the UE after the downlink semi-persistent resource is activated, the response message being configured to indicate that the downlink semi-persistent resource has been activated, the network device can confirm according to the response message that the downlink semi-persistent resource has been activated. Therefore, the problem that the service cannot be normally carried out in the related art due to the inconsistent perceptions of the network and the UE on whether or not the downlink semi-persistent resource is activated can be solved, and the effect of improving the service reliability can be achieved.

Optionally, the examples in this embodiment may refer to the examples described in the above embodiments and optional implementations, and this embodiment will not be repeated here.

It should be understood by those having ordinary skill in the art that, the modules or steps in the present application may be implemented by a general computing device, and may be integrated in a single computing device or distributed on a network consisting of a plurality of computing devices. Optionally, they may be implemented by program codes that can be executed by a computing device, so that they may be stored in a storage device and executed by the computing device. In addition, in some cases, the shown or described steps may be executed in an order different from that described herein. Alternatively, the modules or steps are manufactured into a plurality of integrated circuit modules, or some of the modules or steps are manufactured into single integrated circuit modules. The present application is not limited to any specified combination of hardware and software.

## Claims

1. A resource activation method, comprising:
receiving an activation message transmitted by a network device, the activation message being configured to trigger activation, by a user equipment (UE), of a downlink semi-persistent resource; and
transmitting a response message to the network device after the downlink semi-persistent resource is activated, the response message being configured to indicate that the downlink semi-persistent resource has been activated.

2. The method of claim 1, wherein the transmitting a response message to the network device comprises:
transmitting an acknowledgement (ACK) message to the network device; or
transmitting a medium access control control element (MAC CE) message to the network device.

3. The method of claim 2, wherein, in case of transmitting the MAC CE message to the network device, the MAC CE message carries a downlink identifier, the downlink identifier being configured to indicate that the activated resource is a downlink semi-persistent resource.

4. The method of claim 2, wherein the transmitting an ACK message to the network device comprises:
transmitting the ACK message on a first bandwidth part, the first bandwidth part being a bandwidth part corresponding to a bandwidth part on which the UE receives the activation message.

5. A resource activation method, comprising:
transmitting an activation message to a user equipment (UE), the activation message being configured to trigger activation, by the UE, of a downlink semi-persistent resource; and
receiving a response message, the response message being transmitted by the UE after the downlink semi-persistent resource is activated, the response message being configured to indicate that the downlink semi-persistent resource has been activated.

6. The method of claim 5, wherein the receiving a response message comprises:
receiving an acknowledge (ACK) message; or
receiving a medium access control control element (MAC CE) message.

7. The method of claim 6, wherein, in case of receiving the MAC CE message, the MAC CE message carries a downlink identifier, the downlink identifier being configured to indicate that the activated resource is a downlink semi-persistent resource.

8. The method of claim 6, wherein the receiving an ACK message comprises:
receiving the ACK message on a first bandwidth part, the first bandwidth part being a bandwidth part corresponding to a bandwidth part on which the UE receives the activation message.

9. A resource activation apparatus, comprising:
a receiving module configured to receive an activation message transmitted by a network device, the activation message being configured to trigger a user equipment (UE) to activate a downlink semi-persistent resource; and
a transmitting module configured to transmit a response message to the network device after the downlink semi-persistent resource is activated, the response message being configured to indicate that the downlink semi-persistent resource has been activated.

10. A resource activation apparatus, comprising:
a transmitting module configured to transmit an activation message to a user equipment (UE), the activation message being configured to trigger activation, by the UE, of a downlink semi-persistent resource; and
a receiving module configured to receive a response message, the response message being transmitted by the UE after the downlink semi-persistent resource is activated, the response message being configured to indicate that the downlink semi-persistent resource has been activated.

11. A computer-readable storage medium having stored thereon computer programs which, when executed, perform the method of any one of claims 1 to 4.

12. A computer-readable storage medium having stored thereon computer programs which, when executed, perform the method of any one of claims 5 to 8.

13. An electronic device, comprising a memory and a processor, wherein the memory stores computer programs which, when executed by the processor, cause the processor to perform the method of any one of claims 1 to 4.

14. An electronic apparatus, comprising a memory and a processor, wherein the memory stores computer programs which, when executed by the processor, cause the processor to perform the method of any one of claims 5 to 8.
